# EUROPÄISCHE PATENTSCHRIFT

(11) **EP 2 796 665 B1**
(45) Veröffentlichungstag und Bekanntmachung des Hinweises auf die Patenterteilung: **24.07.2019**
(21) Anmeldenummer: 14165000.2
(22) Anmeldetag: 16.04.2014
(51) Int. Cl.: F01D 5/04, F02C 6/12, F01D 5/02

(54) **Abgasturbolader mit einer Welle aus unterschiedlichen Materialien**
Exhaust gas turbocharger with a shaft made of various materials
Turbocompresseur de gaz d'échappement dotée d'un arbre fabriqué à partir de plusieurs matériaux

(30) Priorität: 24.04.2013 DE 102013207454
(43) Veröffentlichungstag der Anmeldung: 29.10.2014
(73) Patentinhaber: Continental Automotive GmbH, 30165 Hannover (DE)
(72) Erfinder: Hiller, Marc, 67294 Morschheim (DE)

(56) Entgegenhaltungen:
- EP-A1- 1 002 935
- WO-A2-2006/056394
- DE-A1-102007 048 789
- DE-A1-102008 008 857
- DE-A1-102009 049 695
- US-A1- 2006 067 824

## Beschreibung

Die Erfindung betrifft einen Abgasturbolader.

Ein Abgasturbolader weist in der Regel ein Turbinengehäuse, ein Lagergehäuse und ein Verdichtergehäuse auf. Innerhalb des Turbinengehäuses ist ein Turbinenrad vorgesehen, das fest mit einer Welle verbunden ist. Die Welle erstreckt sich vom Turbinengehäuse ausgehend durch das Lagergehäuse bis in das Verdichtergehäuse. Im Lagergehäuse ist die Welle beispielsweise unter Verwendung von Axiallagern und Radiallagern gelagert. Im Verdichtergehäuse ist an der Welle ein Verdichterrad befestigt.

Im Betrieb des Abgasturboladers wird der Abgasmassenstrom einer Brennkraftmaschine in das Turbinengehäuse geleitet und versetzt dort das Turbinenrad und die mit dem Turbinenrad verbundene Welle in eine Drehbewegung. Diese Drehbewegung wird auf das im Verdichtergehäuse angeordnete Verdichterrad übertragen. Das Verdichterrad saugt Frischluft an, verdichtet diese und leitet die verdichtete Frischluft der Brennkraftmaschine zu, deren Leistung durch die verdichtete Frischluft erhöht wird.

Die Welle eines Abgasturboladers wird üblicherweise als Drehteile in einem Stück hergestellt und besteht aus einem einzigen Material. Auf die Welle werden verdichterseitig einige Kleinteile sowie das Verdichterrad montiert und mittels einer Wellenmutter axial verspannt. Über diesen dabei gebildeten Wellenverband muss im Betrieb des Abgasturboladers das benötigte Drehmoment zwischen der Turbine bzw. der Welle und dem Verdichter übertragen werden. Dieses Drehmoment ist im Wesentlichen von der benötigten Verdichterleistung und den Massenträgheitseffekten der verdichterseitigen Teile beim Beschleunigen bzw. Verzögern abhängig. Das maximal übertragbare Drehmoment wird durch Reibungskräfte übertragen, die durch die in der Welle wirksame Vorspannkraft und durch die wirksamen Reibungskoeffizienten bestimmt werden. Dabei kann die Vorspannkraft bis maximal zur zulässigen Wellenfestigkeit aufgeprägt werden. Folglich begrenzt die Wellenfestigkeit das maximal übertragbare Drehmoment. Ist das benötigte Drehmoment größer als das maximal übertragbare Drehmoment, dann kommt es zu einem unerwünschten Durchrutschen des genannten Wellenverbandes.

Soll das übertragbare Drehmoment erhöht werden, dann besteht die Möglichkeit, eine Welle aus einem Werkstoff mit höherer Festigkeit zu verwenden. Ein Nachteil einer derartigen Verwendung einer Welle aus einem Werkstoff mit höherer Festigkeit besteht aber darin, dass die Welle bzw. deren Werkstoff in der Regel nicht hochtemperaturfest ist. Da die Welle im Turbinengehäuse mit dem im Betrieb des Abgasturboladers sehr heißen Turbinenrad verbunden ist, kann aufgrund dieser sehr hohen Temperaturen im Bereich des Turbinenrades eine Entfestigung der Turbine-Welle-Verbindung auftreten. Dies führt zu einer Funktionsunfähigkeit des Abgasturboladers. Des Weiteren ist eine Verwendung einer Welle aus einem Werkstoff mit höherer Festigkeit mit einer unerwünschten Erhöhung der Kosten des Abgasturboladers verbunden.

Weitere alternative Möglichkeiten zur Erhöhung des übertragbaren Drehmoments bestehen darin, den Reibungskoeffizienten zwischen den genannten Bauteilen zu vergrößern oder den gesamten Wellenverband konstruktiv mit größeren Durchmessern und somit mit größeren Schraubenvorspannkräften zu gestalten. Dies ist jedoch ebenfalls mit einer unerwünschten Kostensteigerung verbunden. Des Weiteren wird das Gewicht des Abgasturboladers in unerwünschter Weise erhöht.

Aus der WO 2006/056394 A2 ist ein Abgasturbolader bekannt, welcher ein Turbinenrad aus einer hochwarmfesten Leichtmetalllegierung, ein Verdichterrad, eine Welle aus Stahl, mit welcher das Verdichterrad und das Turbinenrad verbunden sind, und eine Lagerung für die Welle aufweist. Am Turbinenrad ist eine dem Wellendurchmesser angepasste Nabe ausgebildet, die um einen Wellenansatz verlängert sein kann. Die Verbindungsstelle der Nabe des Turbinenrades bzw. des Wellenansatzes der Nabe des Turbinenrades mit der Welle ist in der Umgebung der Lagerung angeordnet.

Aus der DE 2009 049 695 A1 ist ein Verfahren zur Herstellung eines Läufers bekannt, welcher wenigstens ein Turbolader-Laufrad und eine Turbolader-Welle aufweist. Das Turbolader-Laufrad und/oder die Turbolader-Welle sind mittels Metallpulverspritzgießen hergestellt. Das Turbolader-Laufrad und die Turbolader-Welle können als separate Teile ausgebildet und mittels Sintern miteinander verbunden sein. Das Turbolader-Laufrad, bei dem es sich um das Turbinenrad des Turboladers handeln kann, besteht beispielsweise aus einer Nickelbasislegierung. Die Turbolader-Welle besteht beispielsweise aus einem Vergütungsstahl.

Aus der US 2006/067824 A1 ist ein Turbolader bekannt, welcher eine Turbine und eine an einer Verbindungsstelle mit der Turbine verbundenen Welle aufweist. Die Turbine besteht beispielsweise aus einem Titanaluminid. Die Welle besteht beispielsweise aus Titan oder einer Titanlegierung.

Aus der EP 1 002 935 A1 ist ein Turbolader bekannt, der ein aus einer Legierung auf der Basis eines Gamma-Titanaluminids bestehendes Turbinenrad, eine Lagerwelle mit einem Stahlkörper und ein zylinderförmiges Zwischenstück aufweist. Das Turbinenrad und der Stahlkörper sind über das Zwischenstück durch Reibschweißen starr miteinander verbunden. Das Zwischenstück ist aus mindestens zwei starr miteinander verbundenen Zylinderabschnitten aufgebaut, von denen einer aus einer Nickel- oder Kobalt-Basislegierung und der andere von einem Stahl mit einer gegenüber dem Werkstoff des Stahlkörpers geringeren Wärmeleitfähigkeit gebildet ist.

Die Aufgabe der Erfindung besteht darin, einen Abgasturbolader anzugeben, dessen Welle an die im Arbeitsbetrieb des Abgasturboladers auftretenden Bedingungen besser angepasst ist als die Wellen bekannter Turbolader.

Diese Aufgabe wird durch einen Abgasturbolader mit den im Patentanspruch 1 angegebenen Merkmalen gelöst. Vorteilhafte Ausgestaltungen und Weiterbildung eines Abgasturboladers mit den Merkmalen des Patentanspruchs 1 sind in den abhängigen Ansprüchen 2 - 9 angegeben.

Die Vorteile der Erfindung bestehen insbesondere darin, dass das im Turbinengehäuse angeordnete Wellensegment durch eine geeignete Werkstoffauswahl an die im Turbinengehäuse herrschenden Bedingungen angepasst werden kann und das im Verdichtergehäuse angeordnete Wellensegment durch eine geeignete Auswahl eines anderen Werkstoffes an die im Verdichtergehäuse herrschenden Anforderungen angepasst werden kann. Das im Turbinengehäuse angeordnete Wellensegment wird aus einem hochwarmfesten Material gewählt, da im Turbinengehäuse im Betrieb des Abgasturboladers sehr hohe Temperaturen herrschen, da das heiße Abgas einer Brennkraftmaschine in das Turbinengehäuse geleitet wird, um das Turbinenrad anzutreiben. Des Weiteren wird das im Verdichtergehäuse angeordnete Wellensegment aus einem Material mit hoher Festigkeit gewählt, um sicherzustellen, dass ein möglichst hohes Drehmoment vom Turbinenrad bzw. der Welle auf das Verdichterrad übertragen werden kann. Es ist nicht erforderlich, dass dieses Material mit hoher Festigkeit auch hoch temperaturfest ist, da im Bereich des Verdichtergehäuses deutlich niedrigere Temperaturen vorliegen als im Turbinengehäuse.

Die Welle des Abgasturboladers besteht aus zwei Wellensegmenten, die vorzugsweise im Bereich des Lagergehäuses, in welchem die Welle gelagert ist, miteinander verbunden sind. Beispielsweise können die beiden Wellensegmente im Bereich eines turbinenseitigen Radiallagers, im Bereich eines verdichterseitigen Radiallagers, im Bereich eines zwischen den beiden Radiallagern vorgesehenen Abstandshalters, im Bereich eines Lagerbundes, im Bereich eines Ölabweisringes oder im Bereich einer Dichtungsbuchse miteinander verbunden sein. Dies wird nachfolgend anhand der Zeichnungen näher erläutert.

Es zeigt
- Figur 1: eine Längsschnittdarstellung eines Abgasturboladers, welcher ein Turbinengehäuse, ein Lagergehäuse und ein Verdichtergehäuse aufweist,
- Figur 2: eine vergrößerte Darstellung des Detailbereiches D1 von Figur 1 zur Veranschaulichung einer möglichen Verbindungsstelle für die beiden Wellensegmente der Welle des Abgasturboladers,
- Figur 3: eine vergrößerte Darstellung des Detailbereiches D1 von Figur 1 zur Veranschaulichung einer weiteren möglichen Verbindungsstelle für die beiden Wellensegmente der Welle des Abgasturboladers und
- Figur 4: eine vergrößerte Darstellung des Detailbereiches D1 von Figur 1 zur Veranschaulichung dreier weiterer möglicher Verbindungsstellen für die beiden Wellensegmente der Welle des Abgasturboladers.

Gemäß der vorliegenden Erfindung ist bei einem Abgasturbolader, der ein Turbinengehäuse, ein Lagergehäuse und ein Verdichtergehäuse aufweist und welcher mit einer Welle versehen ist, die im Lagergehäuse gelagert ist und die innerhalb des Verdichtergehäuses mit einem Verdichterrad und innerhalb des Turbinengehäuses mit einem Turbinenrad verbunden ist, die Welle aus mehreren miteinander verbundenen Wellensegmenten zusammengesetzt, von denen ein erstes Wellensegment im Turbinengehäuse und ein zweites Wellensegment im Verdichtergehäuse angeordnet ist, wobei das im Turbinengehäuse angeordnete Wellensegment aus einem anderen Material besteht als das im Verdichtergehäuse angeordnete Wellensegment, wie im Anspruch 1 dargestellt.

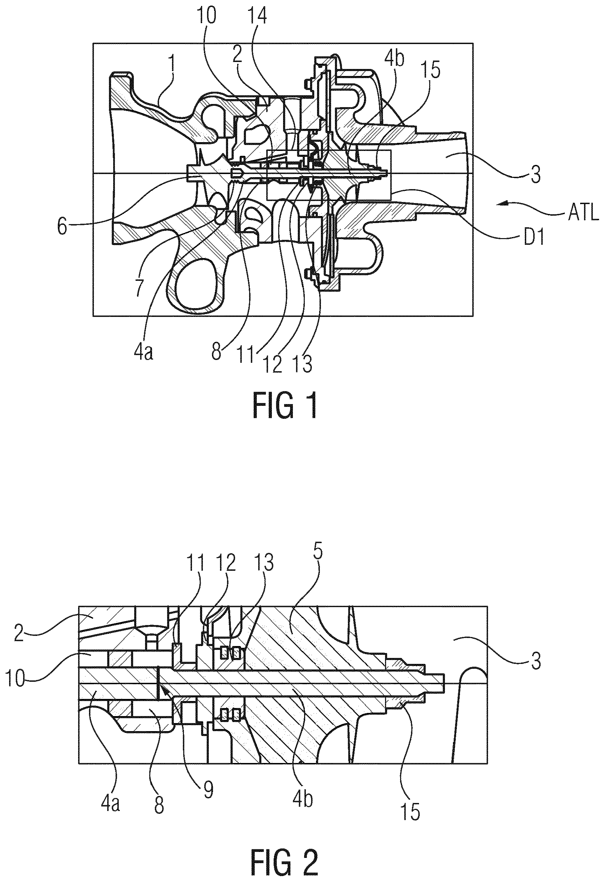

Die Figur 1 zeigt eine Längsschnittdarstellung eines derartigen Abgasturboladers ATL, welcher ein Turbinengehäuse 1, ein Lagergehäuse 2 und ein Verdichtergehäuse 3 aufweist. Des Weiteren ist innerhalb der genannten Gehäuse eine Welle 4 vorgesehen, wobei auf dieser Welle 4 innerhalb des Turbinengehäuses 1 ein Turbinenrad 6 befestigt ist. Ferner ist auf der Welle 4 innerhalb des Verdichtergehäuses 3 ein Verdichterrad 5 befestigt. Die Welle 4 ist innerhalb des Lagergehäuses unter Verwendung eines turbinenseitigen Radiallagers 7 und eines verdichterseitigen Radiallagers 8 gelagert. Zwischen diesen beiden Radiallagern 7 und 8 ist ein Abstandshalter 10 vorgesehen. Des Weiteren ist dem verdichterseitigen Radiallager 8 in Richtung des Verdichtergehäuses 3 ein Lagerbund 11 benachbart. In diesen Lagerbund 11 ist ein Axiallager 14 aufgenommen. Dem Lagerbund 11 ist in Richtung des Verdichtergehäuses 3 ein Ölabweisring 12 benachbart. Diesem wiederum ist in Richtung des Verdichtergehäuses 3 eine Dichtungsbuchse 13 benachbart.

Die Welle 4 ist aus mehreren miteinander verbundenen Wellensegmenten zusammengesetzt, bei dem in der Figur 1 gezeigten Ausführungsbeispiel aus zwei miteinander verbundenen Wellensegmenten 4a und 4b. Das Wellensegment 4a ist im Turbinengehäuse 1 angeordnet und ist dort mit dem Turbinenrad 6 verbunden. Das Wellensegment 4b ist im Verdichtergehäuse 3 angeordnet und dort mit dem Verdichterrad 5 verbunden. Beide Wellensegmente ragen in das Lagergehäuse 2 hinein und weisen im Bereich des Lagergehäuses 2 eine Verbindungsstelle 9 auf. Mögliche Positionierungen dieser Verbindungsstelle 9 im Lagergehäuse werden unten anhand der Figuren 2 - 4 näher erläutert.

Das im Turbinengehäuse 1 angeordnete Wellensegment 4a besteht aus einem anderen Material als das im Verdichtergehäuse 3 angeordnete Wellensegment 4b. Da im Betrieb des Abgasturboladers im Bereich des Turbinengehäuses 1 aufgrund des in dieses eingeleiteten heißen Abgasmassenstromes einer Brennkraftmaschine sehr hohe Temperaturen herrschen, die bis zu 800°C betragen können, wird als Material für das Wellensegment 4a ein hochwarmfestes Material verwendet. Gemäß der Erfindung wird ein hochwarmfestes Material mit der Werkstoff-Nr. 1.4923 gemäß der Klassifizierung EN 10269 verwendet. Dabei handelt es sich um einen hochwarmfesten Chrom-Stahl, welcher einen Molybdänzusatz enthält.

Das im Verdichtergehäuse 3 angeordnete Wellensegment 4b besteht aus einem Material mit hoher Festigkeit, vorzugsweise aus einem kaltverfestigten Werkstoff. Gemäß der Erfindung wird als Material für das Wellensegment 4b ein Vergütungsstahl mit der Werkstoff-Nr. 1.7225 oder 1.7227 gemäß der Klassifizierung EN 10269 verwendet.

Dazu gehören der Vergütungsstahl 42CrMo4 sowie der Vergütungsstahl 42CrMoS4, bei denen es sich um Werkstoffe handelt, die eine hohe Festigkeit bei gleichzeitig hoher Zähigkeit aufweisen.

Da die im Betrieb des Abgasturboladers im Bereich des Verdichtergehäuses auftretenden Temperaturen wesentlich niedriger sind als die im Bereich des Turbinengehäuses auftretenden Temperaturen, muss es sich bei dem Material des Wellenabschnittes 4b nicht um hochwarmfestes Material handeln.

Durch die Wahl eines Materials mit hoher Festigkeit für den Wellenabschnitt 4b wird in vorteilhafter Weise erreicht, dass das von der Welle auf das Verdichterrad übertragene Drehmoment hoch ist, so dass die mittels des Turboladers erreichbare Leistungssteigerung der Brennkraftmaschine im Vergleich zu bekannten Abgasturboladern erhöht ist.

Nachfolgend werden anhand der Figuren 2 - 4 Beispiele gezeigt, an welchen Positionen des Lagergehäuses 2 die Verbindungsstelle 9 der beiden Wellensegmente 4a und 4b vorgesehen sein kann.

Die Figur 2 zeigt eine vergrößerte Darstellung des Detailbereiches D1 von Figur 1. In dieser vergrößerten Darstellung sind ein Teil des Lagergehäuses 2 und des Verdichtergehäuses 3 gezeigt. Es ist ersichtlich, dass der in der Figur 1 gezeigte Wellenabschnitt 4a sich bis in das Lagergehäuse 2 erstreckt und dort an einer Verbindungsstelle 9 mit dem in der Figur 1 gezeigten Wellenabschnitt 4b verbunden ist, welcher ebenfalls bis in das Lagergehäuse 2 hineinreicht. Des Weiteren sind in der Figur 2 der Abstandshalter 10, das verdichterseitige Radiallager 8, der Lagerbund 11, der Ölabweisring 12, die Dichtungsbuchse 13, das Turbinenrad 5 und ein im Verdichtergehäuse 3 vorgesehenes Radiallager 15 gezeigt. Die Verbindungsstelle 9 der beiden Wellenabschnitte 4a und 4b befindet sich bei diesem Ausführungsbeispiel im Bereich des verdichterseitigen Radiallagers 8, welches im Lagergehäuse 2 angeordnet ist.

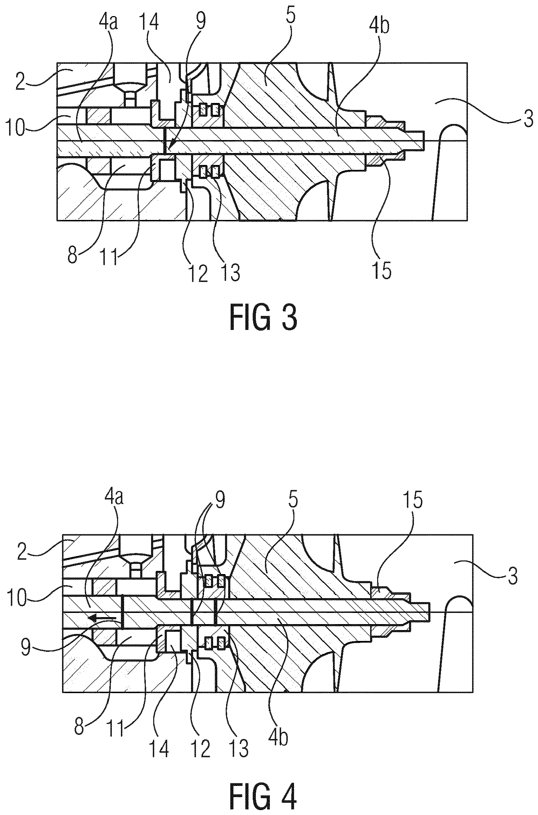

Die Figur 3 zeigt ebenfalls eine vergrößerte Darstellung des Detailbereiches D1 von Figur 1. In dieser vergrößerten Darstellung sind ein Teil des Lagergehäuses 2 und des Verdichtergehäuses 3 gezeigt. Es ist ersichtlich, dass der in der Figur 1 gezeigte Wellenabschnitt 4a sich bis in das Lagergehäuse 2 erstreckt und dort an einer Verbindungsstelle 9 mit dem in der Figur 1 gezeigten Wellenabschnitt 4b verbunden ist, welcher ebenfalls bis in das Lagergehäuse 2 hineinreicht. Des Weiteren sind in der Figur 2 der Abstandshalter 10, das verdichterseitige Radiallager 8, der Lagerbund 11, der Ölabweisring 12, die Dichtungsbuchse 13, das Turbinenrad 5 und ein im Verdichtergehäuse 3 vorgesehenes Radiallager 15 gezeigt. Die Verbindungsstelle 9 der beiden Wellenabschnitte 4a und 4b befindet sich bei diesem Ausführungsbeispiel im Bereich des Lagerbundes 11.

Auch die Figur 4 zeigt eine vergrößerte Darstellung des Detailbereiches D1 von Figur 1. In dieser vergrößerten Darstellung sind ein Teil des Lagergehäuses 2 und des Verdichtergehäuses 3 gezeigt. Es ist ersichtlich, dass der in der Figur 1 gezeigte Wellenabschnitt 4a sich bis in das Lagergehäuse 2 erstreckt und dort an einer Verbindungsstelle 9 mit dem in der Figur 1 gezeigten Wellenabschnitt 4b verbunden ist, welcher ebenfalls bis in das Lagergehäuse 2 hineinreicht. Des Weiteren sind in der Figur 2 der Abstandshalter 10, das verdichterseitige Radiallager 8, der Lagerbund 11, der Ölabweisring 12, die Dichtungsbuchse 13, das Turbinenrad 5 und ein im Verdichtergehäuse 3 vorgesehene Radiallager 15 gezeigt. Für die Verbindungsstelle 9 der beiden Wellenabschnitte 4a und 4b sind in der Figur 4 drei Alternativen aufgezeigt. Die erste Alternative besteht darin, diese Verbindungsstelle 9 im Bereich des Abstandshalters 10 vorzusehen. Die zweite Alternative besteht darin, die Verbindungsstelle 9 im Bereich des Ölabweisringes 12 vorzusehen. Die dritte Alternative besteht darin, die Verbindungsstelle 9 im Bereich der Dichtungsbuchse 13 vorzusehen.

Die Verbindung der beiden Wellensegmente 4a und 4b erfolgt beispielsweise durch ein Verschweißen, ein Verlöten oder ein Verschrauben. Dies kann vor oder nach dem Fertigbearbeiten der Welle geschehen.

Der wesentliche Vorteil der vorstehend beschriebenen Erfindung besteht nach alledem darin, dass für die Welle den jeweiligen Bedingungen der Turbinenseite und der Verdichterseite individuell angepasste unterschiedliche Werkstoffe eingesetzt werden können, so dass der gebildete Gesamtverband bei gleichbleibender Geometrie gegenüber bekannten Abgasturboladern einen deutlichen Vorteil in der Performance hat. Andererseits kann bei feststehender Vorspannkraft der Wellendurchmesser reduziert werden, wodurch Gewichts- und Kosteneinsparungen erzielt werden.

## Patentansprüche

1. Abgasturbolader, welcher ein Turbinengehäuse, ein Lagergehäuse und ein Verdichtergehäuse aufweist und welcher mit einer Welle versehen ist, die im Lagergehäuse gelagert ist und die innerhalb des Verdichtergehäuses mit einem Verdichterrad und innerhalb des Turbinengehäuses mit einem Turbinenrad verbunden ist, wobei die Welle (4) aus mehreren miteinander verbundenen Wellensegmenten (4a,4b) zusammengesetzt ist, von denen ein erstes Wellensegment (4a) im Turbinengehäuse (1) und ein zweites Wellensegment (4b) im Verdichtergehäuse (3) angeordnet ist, und wobei das im Turbinengehäuse angeordnete Wellensegment aus einem hochwarmfesten Material besteht, **dadurch gekennzeichnet, dass** das im Verdichtergehäuse (3) angeordnete Wellensegment (4b) zur Erhöhung des von der Welle auf das Verdichterrad übertragenen Drehmoments aus einem Material mit der Werkstoff-Nr. 1.7225 oder 1.7227 gemäß der Klassifizierung EN 10269 besteht und dass das im Turbinengehäuse (1) angeordnete Wellensegment (4a) aus einem hochwarmfesten Material mit der Werkstoff-Nr. 1.4923 gemäß der Klassifizierung EN 10269 besteht.

2. Abgasturbolader nach Anspruch 1, **dadurch gekennzeichnet, dass** das im Verdichtergehäuse (3) angeordnete Wellensegment (4b) aus einem kaltverfestigten Werkstoff besteht.

3. Abgasturbolader nach einem der vorhergehenden Ansprüche, **dadurch gekennzeichnet, dass** die Welle (4) aus zwei Wellensegmenten (4a,4b) zusammengesetzt ist, die in das Lagergehäuse (2) hineinragen und im Bereich des Lagergehäuses (2) miteinander verbunden sind.

4. Abgasturbolader nach Anspruch 3, **dadurch gekennzeichnet, dass** die beiden Wellensegmente (4a,4b) im Bereich des Lagergehäuses (2) miteinander verschweißt, verlötet oder verschraubt sind.

5. Abgasturbolader nach Anspruch 3 oder 4, **dadurch gekennzeichnet, dass** im Lagergehäuse (2) ein turbinenseitiges Radiallager (7) und ein verdichterseitiges Radiallager (8) vorgesehen sind und die Verbindungsstelle (9) der beiden Wellensegmente (4a,4b) im Bereich des turbinenseitigen Radiallagers (7) oder des verdichterseitigen Radiallagers (8) angeordnet ist.

6. Abgasturbolader nach Anspruch 3 oder 4, **dadurch gekennzeichnet, dass** im Lagergehäuse (2) ein turbinenseitiges Radiallager (7) und ein verdichterseitiges Radiallager (8) vorgesehen sind, welche durch einen Abstandshalter (10) voneinander beabstandet sind, und dass die Verbindungsstelle (9) zwischen den beiden Wellensegmenten (4a,4b) im Bereich des Abstandshalters (10) angeordnet ist.

7. Abgasturbolader nach Anspruch 3 oder 4, **dadurch gekennzeichnet, dass** im Lagergehäuse (2) ein verdichterseitiges Radiallager (8) angeordnet ist, dem in Richtung des Verdichtergehäuses (3) ein Lagerbund (11) benachbart ist und dass die Verbindungsstelle (9) der beiden Wellensegmente (4a,4b) im Bereich des Lagerbundes (11) angeordnet ist.

8. Abgasturbolader nach Anspruch 3 oder 4, **dadurch gekennzeichnet, dass** das Lagergehäuse (2) in Richtung des Verdichtergehäuses (3) einen Ölabweisring (12) aufweist und dass die Verbindungsstelle (9) der beiden Wellensegmente (4a,4b) im Bereich des Ölabweisringes (12) angeordnet ist.

9. Abgasturbolader nach Anspruch 3 oder 4, **dadurch gekennzeichnet, dass** das Lagergehäuse (2) in Richtung des Verdichtergehäuses (3) eine Dichtungsbuchse (13) aufweist und dass die Verbindungsstelle (9) der beiden Wellensegmente (4a,4b) im Bereich der Dichtungsbuchse (13) angeordnet ist.

## Claims

1. Exhaust gas turbocharger which has a turbine housing, a bearing housing and a compressor housing and which is provided with a shaft which is mounted in the bearing housing and which is connected to a compressor impeller within the compressor housing and is connected to a turbine wheel within the turbine housing, the shaft (4) being assembled from a plurality of shaft segments (4a, 4b) which are connected to one another and of which a first shaft segment (4a) is arranged in the turbine housing (1) and a second shaft segment (4b) is arranged in the compressor housing (3), and the shaft segment which is arranged in the turbine housing consisting of a highly heat-resistant material, **characterized in that**, in order to increase the torque which is transmitted from the shaft to the compressor impeller, the shaft segment (4b) which is arranged in the compressor housing (3) consists of a material with the material number 1.7225 or 1.7227 in accordance with the EN 10269 classification, and **in that** the shaft segment (4a) which is arranged in the turbine housing (1) consists of a highly heat-resistant material with the material number 1.4923 in accordance with the EN 10269 classification.

2. Exhaust gas turbocharger according to Claim 1, **characterized in that** the shaft segment (4b) which is arranged in the compressor housing (3) consists of a work-hardened material.

3. Exhaust gas turbocharger according to either of the preceding claims, **characterized in that** the shaft (4) is assembled from two shaft segments (4a, 4b) which protrude into the bearing housing (2) and are connected to one another in the region of the bearing housing (2).

4. Exhaust gas turbocharger according to Claim 3, **characterized in that** the two shaft segments (4a, 4b) are welded, brazed or screwed to one another in the region of the bearing housing (2).

5. Exhaust gas turbocharger according to Claim 3 or 4, **characterized in that** a turbine-side radial bearing (7) and a compressor-side radial bearing (8) are provided in the bearing housing (2), and the connecting point (9) of the two shaft segments (4a, 4b) is arranged in the region of the turbine-side radial bearing (7) or of the compressor-side radial bearing (8).

6. Exhaust gas turbocharger according to Claim 3 or 4, **characterized in that** a turbine-side radial bearing (7) and a compressor-side radial bearing (8) are provided in the bearing housing (2), which radial bearings (7, 8) are spaced apart from one another by way of a spacer element (10), and **in that** the connecting point (9) between the two shaft segments (4a, 4b) is arranged in the region of the spacer element (10).

7. Exhaust gas turbocharger according to Claim 3 or 4, **characterized in that** a compressor-side radial bearing (8) is arranged in the bearing housing (2), a bearing collar (11) adjoining the said compressor-side radial bearing (8) in the direction of the compressor housing (3), and **in that** the connecting point (9) of the two shaft segments (4a, 4b) is arranged in the region of the bearing collar (11).

8. Exhaust gas turbocharger according to Claim 3 or 4, **characterized in that** the bearing housing (2) has an oil baffle ring (12) in the direction of the compressor housing (3), and **in that** the connecting point (9) of the two shaft segments (4a, 4b) is arranged in the region of the oil baffle ring (12).

9. Exhaust gas turbocharger according to Claim 3 or 4, **characterized in that** the bearing housing (2) has a sealing bush (13) in the direction of the compressor housing (3), and **in that** the connecting point (9) of the two shaft segments (4a, 4b) is arranged in the region of the sealing bush (13).

## Revendications

1. Turbocompresseur à gaz d'échappement, lequel comporte un corps de turbine, un boîtier de roulement et un logement de compresseur et lequel est muni d'un arbre qui est logé dans le boîtier de roulement et qui à l'intérieur du logement de compresseur est assemblé avec une roue de compresseur et à l'intérieur du corps de turbine, est assemblé avec une roue de turbine, l'arbre (4) étant composé de plusieurs segments d'arbre (4a, 4b) assemblés les uns aux autres, dont un premier segment d'arbre (4a) est placé dans le corps de turbine (1) et un deuxième segment d'arbre (4b) est placé dans le logement de compresseur (3) et le segment d'arbre placé dans le corps de turbine étant constitué d'une matière résistant à des températures élevées, **caractérisé en ce que** pour augmenter le couple de rotation transmis par l'arbre sur la roue de compresseur, le segment d'arbre (4b) placé dans le logement de compresseur (3) est constitué d'une matière portant la référence n° 1.7225 ou 1.7227 selon la classification EN 10269 et **en ce que** le segment d'arbre (4a) placé dans le corps de turbine (1) est constitué d'une matière résistant à des températures élevées, portant la référence n° 1.4923 selon la classification EN 10269.

2. Turbocompresseur à gaz d'échappement selon la revendication 1, **caractérisé en ce que** le segment d'arbre (4b) placé dans le logement de compresseur (3) est constitué d'une matière écrouie.

3. Turbocompresseur à gaz d'échappement selon l'une quelconque des revendications précédentes, **caractérisé en ce que** l'arbre (4) est composé de deux segments d'arbre (4a, 4b) qui saillissent à l'intérieur du boîtier de roulement (2) et qui dans la zone du boîtier de roulement (2) sont assemblés l'un à l'autre.

4. Turbocompresseur à gaz d'échappement selon la revendication 3, **caractérisé en ce que** les deux segments d'arbre (4a, 4b) sont soudés, brasés ou vissés l'un à l'autre dans la zone du boîtier de roulement (2).

5. Turbocompresseur à gaz d'échappement selon la revendication 3 ou 4, **caractérisé en ce que** dans le boîtier de roulement (2) sont prévus un roulement radial (7) côté turbine et un roulement radial (8) côté compresseur et **en ce que** l'endroit d'assemblage (9) des deux segments d'arbre (4a, 4b) est placé dans la zone du roulement radial (7) côté turbine ou du roulement radial (8) côté compresseur.

6. Turbocompresseur à gaz d'échappement selon la revendication 3 ou 4, **caractérisé en ce que** dans le boîtier de roulement (2) sont prévus un roulement radial (7) côté turbine et un roulement radial (8) côté compresseur, qui sont écartés l'un de l'autre par un espaceur (10) et **en ce que** l'endroit d'assemblage (9) est placé entre les deux segments d'arbre (4a, 4b), dans la zone de l'espaceur (10).

7. Turbocompresseur à gaz d'échappement selon la revendication 3 ou 4, **caractérisé en ce que** dans le boîtier de roulement (2) est placé un roulement radial (8) côté compresseur, au voisinage duquel est placé dans la direction du logement de compresseur (3) une flasque pour roulement (11) et **en ce que** l'endroit d'assemblage (9) des deux segments d'arbre (4a, 4b) est placé dans la zone de la flasque pour roulement (11).

8. Turbocompresseur à gaz d'échappement selon la revendication 3 ou 4, **caractérisé en ce que** le boîtier de roulement (2) comporte dans la direction du logement de compresseur (3) une bague pare-huile (12) et **en ce que** l'endroit d'assemblage (9) des deux segments d'arbre (4a, 4b) est placé dans la zone de la bague pare-huile (12).

9. Turbocompresseur à gaz d'échappement selon la revendication 3 ou 4, **caractérisé en ce que** le boîtier de roulement (2) comporte dans la direction du logement de compresseur (3) un manchon d'étanchéité (13) et **en ce que** l'endroit d'assemblage (9) des deux segments d'arbre (4a, 4b) est placé dans la zone du manchon d'étanchéité (13).
